(19) Europäisches Patentamt
European Patent Office
Office européen des brevets

(11) **EP 4 379 831 A1**

(12) **EUROPEAN PATENT APPLICATION**
published in accordance with Art. 153(4) EPC

(43) Date of publication:
**05.06.2024 Bulletin 2024/23**

(21) Application number: **22849080.1**

(22) Date of filing: **23.06.2022**

(51) International Patent Classification (IPC):
$H01M\ 4/13$ (2010.01)  $H01M\ 4/36$ (2006.01)
$H01M\ 4/62$ (2006.01)  $H01M\ 10/052$ (2010.01)
$H01M\ 10/0562$ (2010.01)

(52) Cooperative Patent Classification (CPC):
H01M 4/13; H01M 4/36; H01M 4/62; H01M 10/052;
H01M 10/0562; Y02E 60/10

(86) International application number:
**PCT/JP2022/025012**

(87) International publication number:
**WO 2023/008005 (02.02.2023 Gazette 2023/05)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **27.07.2021 JP 2021122768**

(71) Applicant: **Panasonic Intellectual Property
Management Co., Ltd.
Kadoma-shi, Osaka 571-0057 (JP)**

(72) Inventors:
• **NISHIO, Yusuke
Tokyo 103-0022 (JP)**
• **NAGAO, Kenji
Tokyo 103-0022 (JP)**
• **SASAKI, Izuru
Tokyo 103-0022 (JP)**

(74) Representative: **Grünecker Patent- und
Rechtsanwälte
PartG mbB
Leopoldstraße 4
80802 München (DE)**

(54) **POSITIVE ELECTRODE MATERIAL AND BATTERY**

(57) A positive electrode material 1000 includes a mixture of a positive electrode active material 110, a solid electrolyte 100, and a conductive material 140. The conductive material 140 contains a first conductive material 150 having an average major axis diameter of greater than or equal to 1 μm and a second conductive material 160 having an average particle diameter of less than or equal to 100 nm. A ratio of a volume of the positive electrode active material 110 to a total volume of the positive electrode active material 110 and the solid electrolyte 100 is greater than or equal to 60% and less than or equal to 90%.

FIG. 1

1000

**Description**

Technical Field

The present disclosure relates to a positive electrode material and a battery.

Background Art

PTL 1 discloses a solid-state battery including a positive electrode containing an active material, a fibrous conductive material, a granular conductive material, and a solid electrolyte.

Citation List

Patent Literature

PTL 1: International Publication No. 2020/130069

Summary of Invention

It is desired that the positive electrode has both high energy density and high electron conductivity in the conventional technology.

A positive electrode material according to an aspect of the present disclosure includes:

a mixture of a positive electrode active material, a solid electrolyte, and a conductive material, wherein the conductive material contains a first conductive material having an average major axis diameter of greater than or equal to 1 $\mu$m and a second conductive material having an average particle diameter of less than or equal to 100 nm, and

a ratio of a volume of the positive electrode active material to a total volume of the positive electrode active material and the solid electrolyte is greater than or equal to 60% and less than or equal to 90%.

According to the present disclosure, the positive electrode can have both high energy density and high electron conductivity.

Brief Description of Drawings

[Fig. 1] Fig. 1 is a cross-sectional view illustrating a schematic configuration of a positive electrode material according to a first embodiment.
[Fig. 2] Fig. 2 is a cross-sectional view illustrating a schematic configuration of a positive electrode material according to a first modification.
[Fig. 3] Fig. 3 is a cross-sectional view illustrating a schematic configuration of a battery according to a second embodiment.
[Fig. 4] Fig. 4 illustrates how the electron conductivity of the positive electrode is evaluated.
[Fig. 5] Fig. 5 is a graph indicating a correlation between voltage and current value in the opposing positive electrode in Example 1.
[Fig. 6] Fig. 6 is a graph indicating the electron conductivities of the positive electrodes of Examples 1 to 9 and Comparative Examples 1 to 5.

Description of Embodiments

(Underlying Knowledge Forming Basis of the Present Disclosure)

PTL 1 discloses a solid-state battery including a positive electrode containing an active material, a fibrous conductive material, a granular conductive material, and a solid electrolyte. PTL 1 discloses that, in the positive electrode material, the amount of the active material is about 60 parts by mass relative to the total amount, 100 parts by mass, of the active material, the fibrous conductive material, the granular conductive material, and the solid electrolyte. In other words, the ratio of the volume of the active material to the total volume of the active material, the fibrous conductive material, the granular conductive material, and the solid electrolyte in the positive electrode material in PTL 1 is about 43%. Thus, in the positive electrode material of PTL 1, the volume ratio of the solid electrolyte having electron-insulating properties is larger than that of the active material. Thus, it is difficult for the positive electrode to have sufficient electron conductivity when including the positive electrode material of PTL 1. The ratio of the electron conductive material may be increased to improve the electron conductivity. However, in such a case, the energy density of the positive electrode decreases because the ratio of the active material decreases.

The inventors conducted a comprehensive study on how to lower resistance in all-solid lithium-ion batteries. As a result, the inventors found that the resistance in the battery is lowered when the electron conductivity of the positive electrode is improved. This seems to be largely affected by the resistance between the positive electrode and the current collector. The inventors also found that, if the ratio of the conductive material is increased too much to improve the electron conductivity, the excess conductive material decreases the energy density of the battery and also inhibits lithium-ion conduction between the positive electrode active material and the solid electrolyte. The inhibition of lithium-ion conduction increases the reaction resistance of the positive electrode active material. Based on the above findings, the inventors found a positive electrode material that can have both high energy density and high electron conductivity in the positive electrode.

(Summary of Aspects of the Present Disclosure)

A positive electrode material according to a first aspect of the present disclosure includes: a mixture of a positive electrode active material, a solid electrolyte, and a conductive material, wherein the conductive material contains a first conductive material having an average major axis diameter of greater than or equal to 1 $\mu$m and a second conductive material having an average particle diameter of less than or equal to 100 nm, and a ratio of a volume of the positive electrode active material to a total volume of the positive electrode active material and the solid electrolyte is greater than or equal to 60% and less than or equal to 90%.

In the above configuration, the volume ratio of the positive electrode active material is larger than that of the solid electrolyte. This can increase the energy density of the positive electrode. Furthermore, the first conductive material has an average major axis diameter of greater than or equal to 1 $\mu$m. This allows easy connection between the first conductive material and the second conductive material in the positive electrode. Thus, an electron conduction network can be efficiently formed in the positive electrode. With this configuration, the positive electrode can have both high energy density and high electron conductivity.

According to a second aspect of the present disclosure, for example, in the positive electrode material according to the first aspect, the ratio of the volume of the positive electrode active material to the total volume of the positive electrode active material and the solid electrolyte may be greater than or equal to 65% and less than or equal to 85%. This configuration can further increase the energy density of the positive electrode.

According to a third aspect of the present disclosure, for example, in the positive electrode material according to the first aspect, the ratio of the volume of the positive electrode active material to the total volume of the positive electrode active material and the solid electrolyte may be greater than or equal to 67% and less than or equal to 75%. This configuration can further increase the energy density of the positive electrode.

According to a fourth aspect of the present disclosure, for example, in the positive electrode material according to any one of the first to third aspects, a mass ratio of the conductive material may be less than or equal to 3 with a mass ratio of the positive electrode active material being taken as 100. This configuration can reduce the possibility that the conductive material will inhibit lithium-ion conduction between the positive electrode active material and the solid electrolyte.

According to a fifth aspect of the present disclosure, for example, in the positive electrode material according to any one of the first to fourth aspects, a ratio of a mass of the second conductive material to a mass of the conductive material is less than or equal to 80%. This configuration can further improve the electron conductivity of the positive electrode.

According to a sixth aspect of the present disclosure, for example, in the positive electrode material according to the fifth aspect, the ratio of the mass of the second conductive material to the mass of the conductive material may be greater than or equal to 5% and less than or equal to 50%. This configuration can further improve the electron conductivity of the positive electrode.

According to a seventh aspect of the present disclosure, for example, in the positive electrode material according to the fifth aspect, the ratio of the mass of the second conductive material to the mass of the conductive material may be greater than or equal to 6% and less than or equal to 25%. This configuration can further improve the electron conductivity of the positive electrode.

According to an eighth aspect of the present disclosure, for example, in the positive electrode material according to any one of the first to seventh aspects, the first conductive material may have an average major axis diameter of greater than or equal to 4 $\mu$m. This configuration is likely to allow the first conductive material to form a conduction path that enables long-distance electron conduction in the positive electrode. This can further improve the electron conductivity of the positive electrode.

According to a ninth aspect of the present disclosure, for example, in the positive electrode material according to the eighth aspect, the second conductive material may have an average particle diameter of less than or equal to 25 nm. This configuration is more likely to allow the second conductive material to attach to the surface of the positive electrode active material. Thus, an electron conduction network is readily formed in the positive electrode because the first conductive material and the second conductive material are connected to each other.

According to a tenth aspect of the present disclosure, for example, in the positive electrode material according to any one of the first to ninth aspects, the first conductive material and the second conductive material may contain a carbon material. This configuration can further improve the electron conductivity of the positive electrode.

According to an eleventh aspect of the present disclosure, for example, in the positive electrode material according to any one of the first to tenth aspects, the first conductive material may contain a fibrous carbon material. This configuration can further improve the electron conductivity of the positive electrode.

According to a twelfth aspect of the present disclosure, for example, in the positive electrode material according to any one of the first to eleventh aspects, the second conductive material may contain carbon black. This configuration can further improve the electron conductivity of the positive electrode.

According to a thirteenth aspect of the present disclosure, for example, in the positive electrode material according to the twelfth aspect, the carbon black may contain acetylene black. This configuration can further improve the electron conductivity of the positive electrode.

According to a fourteenth aspect of the present disclosure, for example, in the positive electrode material according to any one of the first to thirteenth aspects, the solid electrolyte may contain at least one selected from the group consisting of a sulfide solid electrolyte and a halide solid electrolyte. This configuration can improve the output properties of the battery.

According to a fifteenth aspect of the present disclosure, for example, in the positive electrode material according to any one of the first to fourteenth aspects, the positive electrode active material may have a layered rock-salt structure. The layered rock salt structure in which transition metal and lithium are regularly arranged to form a two-dimensional plane allows two-dimensional diffusion of lithium. Thus, this configuration can increase the energy density of the battery.

According to a sixteenth aspect of the present disclosure, for example, the positive electrode material according to any one of the first to fifteenth aspects may further include a coating layer covering at least a portion of a surface of the positive electrode active material. This configuration can further lower the resistance in the battery.

A battery according to a seventeenth aspect of the present disclosure includes: a positive electrode containing a positive electrode material according to any one of the first to sixteenth aspects, a negative electrode, and an electrolyte layer disposed between the positive electrode and the negative electrode.

The above configuration enables the positive electrode to have both high energy density and high electron conductivity. This can increase the energy density of the battery and also can reduce the resistance in the battery.

According to an eighteenth aspect of the present disclosure, for example, in the battery according to the seventeenth aspect, the electrolyte layer may contain a sulfide solid electrolyte. This configuration can improve the output properties of the battery.

Hereafter, embodiments of the present disclosure will be described with reference to the drawings.

(First Embodiment)

[Positive Electrode Material]

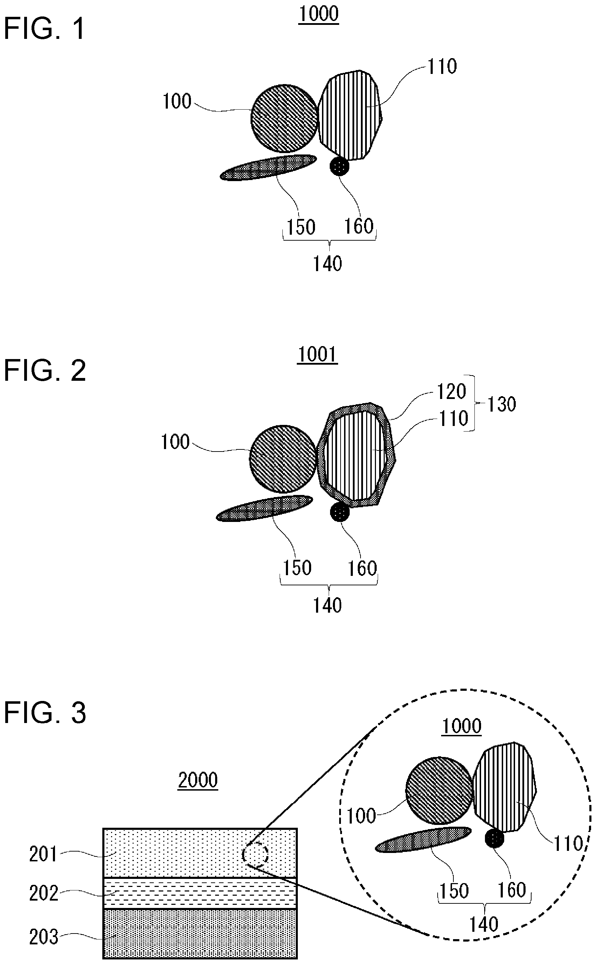

Fig. 1 is a cross-sectional view illustrating a schematic configuration of a positive electrode material 1000 according to a first embodiment.

The positive electrode material 1000 contains a mixture of a positive electrode active material 110, a solid electrolyte 100, and a conductive material 140. The conductive material 140 contains a first conductive material 150 having an average major axis diameter of greater than or equal to 1 μm and a second conductive material 160 having an average particle diameter of less than or equal to 100 nm. The ratio of the volume of the positive electrode active material 110 to the total volume of the positive electrode active material 110 and the solid electrolyte 100 is greater than or equal to 60% and less than or equal to 90%.

In the above configuration, the volume content of the positive electrode active material 110 is larger than that of the solid electrolyte 100. This can increase the energy density of the positive electrode. Furthermore, the first conductive material 150 has an average major axis diameter of greater than or equal to 1 μm. This allows the first conductive material 150 and the second conductive material 160 to be readily connected in the positive electrode. Thus, an electron conduction network can be efficiently formed in the positive electrode. This enables the positive electrode to have both high energy density and high electron conductivity.

The average major axis diameter of the first conductive material 150 can be measured, for example, in a SEM image produced by a scanning electron microscope. Specifically, the average major axis diameter is obtained by calculating the average of the major axis diameters of 20 randomly selected particles of the first conductive material 150 in a SEM image. Here, the major axis diameter of the first conductive material 150 is defined as a diameter of the smallest-area circle that encloses a particle of the first conductive material 150, in a SEM image of the particles of the first conductive material 150.

The average particle diameter of the second conductive material 160 can be measured, for example, using a TEM image produced by a transmission electron microscope (TEM). Specifically, the average particle diameter is obtained by calculating the average of the equivalent area diameters of 20 randomly selected particles of the second conductive material 160 in a TEM image.

Here, the average major diameter axis of the first conductive material and the average particle diameter of the second conductive material in the positive electrode material can be measured, for example, by the following method. First, the positive electrode material is scraped from the battery without being mixed with the negative electrode material, and thus the positive electrode material is obtained. The obtained positive electrode material is mixed with water to dissolve the solid electrolyte and filtered to separate out the active material, the binder, and the conductive material, which are materials other than the solid electrolyte. Next, the separated active material, binder, and conductive material are mixed with an organic solvent such as toluene to dissolve the binder and filtered to separate out the active material and the conductive material. Furthermore, the separated active material and conductive material are mixed with an acid solution to dissolve the active material and filtered to separate out the conductive material. The separated conductive material is then dried. The dried conductive material enables the above-described measurement of the average major axis diameter of the first conductive material using a SEM image and the above-described measurement of the average particle diameter of the second conductive material using a TEM image.

The ratio of the volume of the positive electrode active material 110 to the total volume of the positive electrode active material 110 and the solid electrolyte 100 can be calculated, for example, by the following method. The positive electrode active material 110 contained in the positive electrode material 1000 can be separated out, for example, by dissolving only the solid electrolyte 100 in a solvent. The total mass of the positive electrode active material 110 and the solid electrolyte 100 and the mass of the positive electrode active material 110 can be obtained from the masses before and after the above dissolution. The specific gravity of each of the positive electrode active material 110 and the solid electrolyte 100 can be obtained from literature, for example. The ratio of the volume of the positive electrode active material 110 to the total volume of positive electrode active material 110 and the solid electrolyte 100 can be calculated by using these values.

The ratio of the volume of the positive electrode active material 110 to the total volume of the positive electrode active material 110 and the solid electrolyte 100 may be greater than or equal to 65% and less than or equal to 85%. This configuration can further increase the energy density of the positive electrode.

The ratio of the volume of the positive electrode active material 110 to the total volume of the positive electrode active material 110 and the solid electrolyte 100 may be greater than or equal to 67% and less than or equal to 75%. This configuration can further increase the energy density of the positive electrode.

The mass ratio of the conductive material 140 may be less than or equal to 3 with the mass ratio of the positive electrode active material 110 being taken as 100. This configuration can reduce the possibility that the conductive material 140 will inhibit the lithium-ion conduction between the positive electrode active material 110 and the solid electrolyte 100.

The mass ratio of the conductive material 140 with the mass ratio of the positive electrode active material 110 being taken as 100 can be calculated by the following method. The mass of the positive electrode active material 110 contained in the positive electrode material 1000 can be obtained by the method described above. The mass of the conductive material 140 in the positive electrode material 1000 can be obtained, for example, from a decrease in mass caused by high-temperature pyrolysis. The mass ratio of the conductive material 140 with the mass ratio of the positive electrode active material 110 being taken as 100 can be calculated using these values.

The ratio of the mass of the second conductive material 160 to the mass of the conductive material 140 may be less than or equal to 80%. This configuration can further improve the electron conductivity of the positive electrode.

The ratio of the mass of the second conductive material 160 to the mass of the conductive material 140 can be calculated, for example, by the following method. For the conductive material 140 separated out by the method described above, the mass of the second conductive material 160 relative to the mass of the conductive material 140 can be obtained by particle size distribution measurement or classification. In this way, the ratio of the mass of the second conductive material 160 to the mass of the conductive material 140 can be calculated.

The ratio of the mass of the second conductive material 160 to the mass of the conductive material 140 may be greater than or equal to 5% and less than or equal to 50%. This configuration can further improve the electron conductivity of the positive electrode.

The ratio of the mass of the second conductive material 160 to the mass of the conductive material 140 may be greater than or equal to 6% and less than or equal to 25%. This configuration can further improve the electron conductivity of the positive electrode.

(Conductive Material)

The first conductive material 150 and the second conductive material 160 may contain a carbon material. This configuration can further improve the electron conductivity of the positive electrode.

The first conductive material 150 and the second conductive material 160 may be a carbon material. This configuration can further improve the electron conductivity of the positive electrode.

The first conductive material 150 may contain a fibrous carbon material. This configuration can further improve the electron conductivity of the positive electrode.

The first conductive material 150 may be a fibrous carbon material. This configuration can further improve the electron conductivity of the positive electrode.

Examples of the fibrous carbon material include fibrous carbons such as vapor grown carbon fibers, carbon nanotubes, and carbon nanofibers. If the first conductive material 150 contains a fibrous carbon material, the first conductive material 150 may contain any one of the above materials or two or more of the above materials. When the first conductive material 150 is a fibrous carbon material, the first conductive material 150 may be composed of any one of the above materials or two or more of the above materials.

The second conductive material 160 may contain carbon black. This configuration can further improve the electron conductivity of the positive electrode.

The second conductive material 160 may be carbon black. This configuration can further improve the electron conductivity of the positive electrode.

Examples of the carbon black include acetylene black and Ketjen black. When the second conductive material 160 contains carbon black, the second conductive material 160 may contain acetylene black or Ketjen black. The second conductive material 160 may contain any of acetylene black and Ketjen black. The carbon black that contains acetylene black can further improve the electron conductivity of the positive electrode. When the second conductive material 160 is carbon black, the second conductive material 160 may be acetylene black or Ketjen black. The second conductive material 160 may be composed of acetylene black and Ketjen black.

When the first conductive material 150 is a fibrous carbon material, the first conductive material 150 that contains the fibrous carbon material as a main component may further contain inevitable impurities, starting raw materials used in synthesis of the fibrous carbon material, by-products, degraded products, or the like. In this disclosure, the "main component" means a component most abundant by mass.

The first conductive material 150 may, for example, contain a fibrous carbon material in a mass ratio of 100% to the whole first conductive material 150, excluding inevitable impurities.

As above, the first conductive material 150 may be composed solely of the fibrous carbon material.

When the second conductive material 160 is carbon black, the second conductive material 160 that contains carbon black as a main component may further contain inevitable impurities, starting raw materials used in synthesis of the carbon black, by-products, degraded products, or the like.

The second conductive material 160 may, for example, contain carbon black in a mass ratio of 100% to the whole second conductive material 160, excluding inevitable impurities.

As above, the second conductive material 160 may be composed solely of carbon black.

The first conductive material 150 may have an average major axis diameter of greater than or equal to 4 $\mu$m. This configuration is likely to allow the first conductive material 150 to form a conduction path that enables long-distance electron conduction in the positive electrode. This can further improve the electron conductivity of the positive electrode.

The second conductive material 160 may have an average particle diameter of less than or equal to 25 nm. This configuration allows the second conductive material 160 to readily attach to the surface of the positive electrode active material 110. Thus, an electron conduction network is readily formed in the positive electrode because the first conductive material 150 and the second conductive material 160 are connected to each other.

The first conductive material 150 may have any shape that has an average major axis diameter of greater than or equal to 1 $\mu$m. The first conductive material 150 may be, for example, fibrous or acicular. The shape of the first conductive material 150 may be fibrous.

The second conductive material 160 may have any shape that has the average particle diameter of less than or equal to 100 nm. The second conductive material 160 may be, for example, spherical or ellipsoidal. The shape of the second conductive material 160 may be spherical.

The conductive material 140 may contain a conductive material different from the first conductive material 150 and the second conductive material 160. Examples of such a conductive material include graphites such as natural graphite and artificial graphite, metal fibers, fluorocarbons, metal powders such as aluminum, conductive whiskers such as zinc oxide and potassium titanate, conductive metal oxides such as titanium oxide, and conductive polymer compounds such as polyaniline, polypyrrole, and polythiophene. This configuration can further improve the electron conductivity of the positive electrode.

The conductive material 140 may be composed only of the first conductive material 150 and the second conductive material 160. In other words, the conductive material 140 does not have to contain a conductive material different from the first conductive material 150 and the second conductive material 160.

(Positive Electrode Active Material)

As the positive electrode active material 110, a material that can be used as a positive electrode active material of all-solid-state lithium-ion batteries may be used. Examples of the positive electrode active material 110 include $LiCoO_2$, $LiNi_xMe_{1-x}O_2$, $LiNi_xCo_{1-x}O_2$, $LiNi_{1/3}Co_{1/3}Mn_{1/3}O_2$, $LiMnO_2$, different- element substituted Li-Mn spinel, lithium titanate, lithium metal phosphate, and transition metal oxide. In $LiNi_xMe_{1-x}O_2$, x satisfies $0.5 \leq x < 1$ and Me contains at least one selected from the group consisting of Co, Mn, and Al. In $LiNi_xCo_{1-x}O_2$, x satisfies $0 < x < 0.5$. Examples of different-element substituted Li-Mn spinel include $LiMn_{1.5}Ni_{0.5}O_4$, $LiMn_{1.5}Al_{0.5}O_4$, $LiMn_{1.5}Mg_{0.5}O_4$, $LiMn_{1.5}Co_{0.5}O_4$, $LiMn_{1.5}Fe_{0.5}O_4$, and $LiMn_{1.5}Zn_{0.5}O_4$. An example of lithium titanate is $Li_4Ti_5O_{12}$. Examples of lithium metal phosphate include $LiFePO_4$, $LiMnPO_4$, $LiCoPO_4$, and $LiNiPO_4$. Examples of transition metal oxide include $V_2O_5$ and $MoO_3$.

The positive electrode active material 110 may be a lithium-containing composite oxide selected from the group consisting of $LiCoO_2$, $LiNi_xMe_{1-x}O_2$, $LiNi_xCo_{1-x}O_2$, $LiNi_{1/3}Co_{1/3}Mn_{1/3}O_2$, $LiMnO_2$, different-element substituted Li-Mn spinel, and lithium metal phosphate.

If the positive electrode active material 110 is a lithium-containing composite oxide, the positive electrode active material 110 may have a layered rock-salt structure. The layered rock salt structure in which transition metal and lithium are regularly arranged to form a two-dimensional plane allows two-dimensional diffusion of lithium. Thus, this configuration can increase the energy density of the battery.

(Solid Electrolyte)

The solid electrolyte 100 may contain at least one selected from the group consisting of a sulfide solid electrolyte and a halide solid electrolyte. This configuration can improve the output properties of the battery.

The solid electrolyte 100 may be a mixture of a sulfide solid electrolyte and a halide solid electrolyte.

Examples of the sulfide solid electrolyte include $Li_2S-P_2S_5$, $Li_2S-SiS_2$, $Li_2S-B_2S_3$, $Li_2S-GeS_2$, $Li_{3.25}Ge_{0.25}P_{0.75}S_4$, and $Li_{10}GeP_2S_{12}$. The sulfide solid electrolyte may be Argyrodite sulfide solid electrolyte such as $Li_6PS_5Cl$, $Li_6PS_5Br$, and $Li_6PS_5I$. The sulfide solid electrolytes may additionally contain LiX, $Li_2O$, $MO_q$, or $Li_pMO_q$, for example. Here, X represents at least one selected from the group consisting of F, Cl, Br, and I. Furthermore, M represents at least one selected from the group consisting of P, Si, Ge, B, Al, Ga, In, Fe, and Zn. Each of p and q represents a natural number. One or more sulfide solid electrolytes selected from the above materials may be used.

The above configuration can further improve the ionic conductivity of the sulfide solid electrolyte. This can improve the charge and discharge efficiency of the battery.

The halide solid electrolyte may be represented by Formula 1 below.

$$Li_\alpha M_\beta X_\gamma \qquad \text{Formula (1)}$$

In Formula 1, $\alpha$, $\beta$, and $\gamma$ each represent an independent value that is greater than 0. M includes at least one element selected from the group consisting of metallic elements other than Li and metalloid elements. X includes at least one selected from the group consisting of F, Cl, Br, and I.

In this disclosure, the "metalloid elements" include B, Si, Ge, As, Sb, and Te. The "metallic elements" include all elements of group 1 to group 12 of the periodic table except for hydrogen and all elements of group 13 to group 16 of the periodic table except for B, Si, Ge, As, Sb, Te, C, N, P, O, S, and Se. In other words, "metalloid elements" or "metallic elements" are elements that can become a cation when forming an inorganic compound with a halogen compound.

Halide solid electrolytes represented by Formula 1 have higher ionic conductivity than halide solid electrolytes such as LiI, which are composed of Li and a halogen element. Thus, the halide solid electrolyte represented by Formula 1 can have further higher ionic conductivity.

In Formula 1, M may represent at least one element selected from the group consisting of metallic elements other than Li and metalloid elements.

In Formula 1, X may represent at least one selected from the group consisting of F, Cl, Br, and I.

Formula 2 may satisfy $2.5 \leq \alpha \leq 3$, $1 \leq \beta \leq 1.1$, and $\gamma = 6$. This configuration can further improve the ionic conductivity of the halide solid electrolyte.

In Formula 1, M may include Y, or yttrium. In other words, the halide solid electrolyte may contain Y as a metallic element. This configuration can further improve the ionic conductivity of the halide solid electrolyte.

The halide solid electrolyte containing Y may be, for example, a compound represented by the formula $Li_aMe_bY_cX_6$. Here, $a + mb + 3c = 6$ and $c > 0$ are satisfied. Me represents at least one element selected from the group consisting of metallic elements other than Li and Y and metalloid elements. m represents the valence of the element Me. X represents at least one selected from the group consisting of F, Cl, Br, and I.

Me may represent, for example, at least one selected from the group consisting of Mg, Ca, Sr, Ba, Zn, Sc, Al, Ga, Bi, Zr, Hf, Ti, Sn, Ta, and Nb.

The above configuration can further improve the ionic conductivity of the halide solid electrolyte.

As the halide solid electrolyte, the following materials may be used, for example. The following configuration can further improve the ionic conductivity of the halide solid electrolyte.

The halide solid electrolyte may be a material represented by Formula A1 below.

$$Li_{6-3d}Y_dX_e \text{ Formula} \qquad (A1)$$

In Formula A1, X represents at least one selected from the group consisting of F, Cl, Br, and I. Furthermore, $0 < d < 2$ is satisfied.

The halide solid electrolyte may be a material represented by Formula A2 below.

$$Li_3YX_6 \text{ Formula} \qquad (A2)$$

In Formula A2, X represents at least one selected from the group consisting of F, Cl, Br, and I.

The halide solid electrolyte may be a material represented by Formula A3 below.

$$Li_{3-3\delta}Y_{1+\delta}Cl_6 \text{ Formula} \qquad (A3)$$

In Formula A3, $0 < \delta \leq 0.15$ is satisfied.

The halide solid electrolyte may be a material represented by Formula A4 below.

$$Li_{3-3\delta}Y_{1+\delta}Br_6 \qquad \text{Formula (A4)}$$

In Formula A4, $0 < \delta \leq 0.25$ is satisfied.

The halide solid electrolyte may be a material represented by Formula A5 below.

$$Li_{3-3\delta+a}Y_{1+\delta-a}Me_aCl_{6-x-y}Br_xI_y \qquad \text{Formula (A5)}$$

In Formula A5, Me contains at least one selected from the group consisting of Mg, Ca, Sr, Ba, and Zn. Me may be at least one selected from the group consisting of Mg, Ca, Sr, Ba, and Zn.

In Formula A5, $-1 < \delta < 2$, $0 < a < 3$, $0 < (3 - 3\delta + a)$, $0 < (1 + \delta - a)$, $0 \leq x \leq 6$, $0 \leq y \leq 6$, and $(x + y) \leq 6$ are satisfied.

The halide solid electrolyte may be a material represented by Formula A6 below.

$$Li_{3-3\delta}Y_{1+\delta-a}Me_aCl_{6-x-y}Br_xI_y \text{ Formula} \qquad (A6)$$

In Formula A6, Me contains at least one selected from the group consisting of Al, Sc, Ga, and Bi. Me may be at least one selected from the group consisting of Al, Sc, Ga, and Bi.

In Formula A6, $-1 < \delta < 1$, $0 < a < 2$, $0 < (1 + \delta - a)$, $0 \leq x \leq 6$, $0 \leq y \leq 6$, and $(x + y) \leq 6$ are satisfied.

The halide solid electrolyte may be a material represented by Formula A7 below.

$$Li_{3-3\delta-a}Y_{1+\delta-a}Me_aCl_{6-x-y}Br_xI_y \qquad \text{Formula (A7)}$$

In Formula A7, Me contains at least one selected from the group consisting of Zr, Hf and Ti. Me may be at least one selected from the group consisting of Zr, Hf, and Ti.

In Formula A7, $-1 < \delta < 1$, $0 < a < 1.5$, $0 < (3 - 3\delta - a)$, $0 < (1 + \delta - a)$, $0 \leq x \leq 6$, $0 \leq y \leq 6$, and $(x + y) \leq 6$ are satisfied.

The halide solid electrolyte may be a material represented by Formula A8 below.

$$Li_{3-3\delta-2a}Y_{1+\delta-a}Me_aCl_{6-x-y}Br_xI_y \qquad \text{Formula (A8)}$$

In Formula A8, Me contains at least one selected from the group consisting of Ta and Nb. Me may be at least one selected from the group consisting of Ta and Nb.

In Formula A8, $-1 < \delta < 1$, $0 < a < 1.2$, $0 < (3 - 3\delta - 2a)$, $0 < (1 + \delta - a)$, $0 \leq x \leq 6$, $0 \leq y \leq 6$, and $(x + y) \leq 6$ are satisfied.

Specific examples of the halide solid electrolyte include $Li_3YX_6$, $Li_2MgX_4$, $Li_2FeX_4$, $Li(Al,Ga,In)X_4$, and $Li_3(Al,Ga,In)X_6$. Here, X represents at least one selected from the group consisting of F, Cl, Br, and I.

In this disclosure, "(A,B,C)" in a formula means "at least one selected from the group consisting of A, B, and C". For example, "(Al,Ga,In)" is synonymous with "at least one selected from the group consisting of Al, Ga, and In". The same holds for the other elements.

The solid electrolyte material does not have to contain sulfur. This configuration can reduce generation of hydrogen sulfide gas. Thus, safer batteries can be produced.

The solid electrolyte 100 may have any shape. The shape of the solid electrolyte 100 may be, for example, acicular, spherical, or ellipsoidal. For example, the shape of the solid electrolyte 100 may be particulate.

For example, when the shape of the solid electrolyte 100 is particulate (e.g., spherical), the median diameter of the solid electrolyte 100 may be less than or equal to 100 $\mu$m. When the median diameter of the solid electrolyte 100 is less than or equal to 100 $\mu$m, the positive electrode active material 110 and the solid electrolyte 100 can be favorably dispersed in the positive electrode material 1000. This improves the charge and discharge properties of the battery.

The median diameter of the solid electrolyte 100 may be less than or equal to 10 $\mu$m. With this configuration, the positive electrode active material 110 and the solid electrolyte 100 can be favorably dispersed in the positive electrode material 1000.

The median diameter of the solid electrolyte 100 may be smaller than that of the positive electrode active material 110. With this configuration, the positive electrode active material 110 and the solid electrolyte 100 can be more favorably dispersed in the positive electrode material 1000.

The positive electrode active material 110 may have any shape. The shape of the positive electrode active material 110 may be, for example, acicular, spherical, or ellipsoidal. For example, the shape of the positive electrode active material 110 may be particulate.

The median diameter of the positive electrode active material 110 may be greater than or equal to 0.1 $\mu$m and less than or equal to 100 $\mu$m. When the median diameter of the positive electrode active material 110 is greater than or equal to 0.1 $\mu$m, the positive electrode active material 110 and the solid electrolyte 100 can be favorably dispersed in the positive electrode material 1000. This improves the charge and discharge properties of the battery. The positive electrode active material 110 having the median diameter of less than or equal to 100 $\mu$m allows the lithium diffusion rate in the positive electrode active material 110 to be sufficiently high. This enables the battery to operate with a high output.

The median diameter of the positive electrode active material 110 may be larger than that of the solid electrolyte 100. With this configuration, the positive electrode active material 110 and the solid electrolyte 100 can be favorably dispersed.

In this disclosure, the "median diameter" means a particle diameter (d50) at which the cumulative volume is 50% in the volume-based particle size distribution. The volume-based particle size distribution is measured using, for example, a laser diffraction measurement apparatus or an image analyzer.

In the positive electrode material 1000, the solid electrolyte 100 and the positive electrode active material 110 may be in contact with each other.

The positive electrode material 1000 may contain particles of multiple solid electrolytes 100 and particles of multiple positive electrode active materials 110.

The amount of the solid electrolyte 100 and the amount of the positive electrode active material 110 in the positive electrode material 1000 may be equal or different from each other.

The positive electrode material 1000 may contain multiple conductive materials 140.

The positive electrode material 1000 may contain multiple first conductive materials 150 and multiple second conductive materials 160.

<Method of Producing Positive Electrode Material>

The positive electrode material 1000 may be produced by the following method.

The positive electrode active material 110, the solid electrolyte 100, and the conductive material 140 are mixed to produce a mixture of these materials. The conductive material 140 contains the first conductive material 150 and the second conductive material 160. For example, a solvent and the conductive material 140 may be provided first, and the conductive material 140 is mixed into the solvent to produce a mixture. Then, the positive electrode active material 110 and the solid electrolyte 100 may be added and mixed into the mixture. In this way, the positive electrode material 1000 containing the mixture of the positive electrode active material 110, the solid electrolyte 100, and the conductive material 140 is produced.

The method of mixing the positive electrode active material 110, the solid electrolyte 100, and the conductive material 140 is not limited. For example, these materials may be mixed using a machine such as a homogenizer. A homogenizer can form a uniform mixture. The mixing ratio of the positive electrode active material 110 to the solid electrolyte 100 is not limited.

(First Modification)

Fig. 2 is a cross-sectional view illustrating a schematic configuration of a positive electrode material 1001 according to a first modification. The positive electrode material 1001 further includes a coating layer 120 that covers at least a portion of the surface of the positive electrode active material 110. The positive electrode active material 110 whose surface is at least partially covered by the coating layer 120 is referred to as a "coated positive electrode active material 130". As above, the positive electrode material 1001 may further include a coating layer 120 that covers at least a portion of the surface of the positive electrode active material 110. This configuration can further lower the resistance in the battery.

The coating layer 120 is in direct contact with the positive electrode active material 110.

Hereinafter, the material constituting the coating layer 120 is referred to as a "coating material". The coated positive electrode active material 130 in the second embodiment contains the positive electrode active material 110 and a coating material. The coating material on at least a portion of the surface of the positive electrode active material 110 forms the coating layer 120.

The coating layer 120 may uniformly cover the positive electrode active material 110. In this configuration, the positive electrode active material 110 and the coating layer 120 are in close contact with each other, further reducing the resistance in the battery.

The coating layer 120 may cover only a portion of the surface of the positive electrode active material 110. Direct contact between the particles of the positive electrode active material 110 through the portions not covered by the coating layer 120 improves the electron conductivity between the particles of the positive electrode active material 110. This enables the battery to operate with a high output.

The covering of the positive electrode active material 110 by the coating layer 120 prevents formation of an oxide film caused by oxidative degradation of another solid electrolyte during battery charging. This improves the charge and discharge efficiency of the battery. An example of another solid electrolyte is the solid electrolyte 100.

The coating material may contain Li and at least one selected from the group consisting of O, F and Cl.

The coating material may include at least one selected from the group consisting of lithium niobate, lithium phosphate, lithium titanate, lithium tungstate, lithium fluorozirconate, lithium fluoroaluminate, lithium fluorotitanate, and lithium fluoromagnesate.

The coating material may be lithium niobate ($LiNbO_3$).

<Method of Producing Positive Electrode Material>

The positive electrode material 1001 can be produced by the method of producing the positive electrode material 1000 described in the first embodiment in which the positive electrode active material 110 is replaced with the coated positive electrode active material 130.

Here, the coated positive electrode active material 130 can be produced, for example, by the following method. First, a coating layer 120 is formed on surfaces of the particles of the positive electrode active material 110. The method of forming the coating layer 120 is not limited. Examples of the method of forming the coating layer 120 include a liquid-phase coating method and a gas-phase coating method.

For example, in the liquid-phase coating method, a precursor solution of the ion conductive material is applied to the surface of the positive electrode active material 110. In the formation of the coating layer 120 containing $LiNbO_3$, the precursor solution can be a mixed solution (sol solution) of a solvent, lithium alkoxide, and niobium alkoxide. An example of lithium alkoxide includes lithium ethoxide. An example of niobium alkoxide includes niobium ethoxide. The solvent is, for example, alcohol such as ethanol. The amounts of lithium alkoxide and niobium alkoxide are adjusted so that the coating layer 120 has the target composition. Water may be added to the precursor solution as needed. The precursor solution may be acidic or alkaline.

The method of applying the precursor solution to the surface of the positive electrode active material 110 is not limited. For example, the precursor solution can be applied to the surface of the positive electrode active material 110 using a tumbling fluidized bed granulating-coating machine. A tumbling fluidized bed granulating-coating machine is capable of spraying the precursor solution to the positive electrode active material 110 while tumbling and fluidizing the positive electrode active material 110, and thus the precursor solution is applied to the surface of the positive electrode active material 110. This forms a precursor film on the surface of the positive electrode active material 110. The positive electrode active material 110 covered by the precursor film is then heat-treated. The heat treatment causes gelation of the precursor film, forming the coating layer 120. In this way, the coated positive electrode active material 130 is produced. At this point, the coating layer 120 covers substantially the entire surface of the positive electrode active material 110.

The thickness of the coating layer 120 is substantially uniform.

Examples of the gas-phase coating method include pulsed laser deposition (PLD), vacuum deposition, sputtering, thermal chemical vapor deposition (CVD), and plasma chemical vapor deposition. For example, in the PLD, the ion-conducting material as a target is irradiated with a pulsed laser with high energy (e.g., KrF Excimer Laser, wavelength of 248 nm) to deposit the sublimated ion-conducting material on the surface of the positive electrode active material 110. In the formation of the coating layer 120 containing $LiNbO_3$, densely sintered $LiNbO_3$ is used as a target.

(Second Embodiment)

Hereinafter, a second embodiment will be described. The features identical to those in the first embodiment will not be described as appropriate.

Fig. 3 is a cross-sectional view illustrating a schematic configuration of a battery 2000 according to the second embodiment.

The battery 2000 according to the second embodiment includes a positive electrode 201, an electrolyte layer 202, and a negative electrode 203. The positive electrode 201 contains the positive electrode material of the first embodiment or the first modification. The electrolyte layer 202 is disposed between the positive electrode 201 and the negative electrode 203. In Fig. 3, the positive electrode material 1000 is illustrated as an example of the positive electrode material contained in the positive electrode 201.

The above configuration enables the positive electrode 201 to have both high energy density and high electron conductivity. This can increase the energy density of the battery 2000 and decrease the resistance in the battery 2000.

When the positive electrode material is the positive electrode material 1000, the volume ratio "v1:(100 - v1)" between the positive electrode active material 110 and the solid electrolyte 100 in the positive electrode 201 may satisfy $30 \leq v1 \leq 95$. Here, v1 represents the volume ratio of the positive electrode active material 110 with the total volume of the positive electrode active material 110 and the solid electrolyte 100 in the positive electrode 201 being taken as 100. When $30 \leq v1$ is satisfied, the battery 2000 can have sufficient energy density. When $v1 \leq 95$ is satisfied, the battery 2000 can operate with a high output.

When the positive electrode material is the positive electrode material 1001, the volume ratio "v11:(100 - v11)" between the coated positive electrode active material 130 and the solid electrolyte 100 of the positive electrode 201 may satisfy $30 \leq v11 \leq 95$. Here, v11 represents the volume ratio of the coated positive electrode active material 130 with the total volume of the coated positive electrode active material 130 and the solid electrolyte 100 in the positive electrode 201 being taken as 100. When $30 \leq v11$ is satisfied, the battery 2000 can have sufficient energy density. When $v11 \leq 95$ is satisfied, the battery 2000 can operate with a high output.

The thickness of the positive electrode 201 may be greater than or equal to 10 $\mu$m and less than or equal to 500 $\mu$m. When the thickness of the positive electrode 201 is greater than or equal to 10 $\mu$m, the battery 2000 can have sufficient energy density. When the thickness of the positive electrode 201 is less than or equal to 500 $\mu$m, the battery 2000 can operate with a high output.

The electrolyte layer 202 is a layer containing an electrolyte. The electrolyte is, for example, a solid electrolyte. In other words, the electrolyte layer 202 may be a solid electrolyte layer. The materials listed as the examples of the solid electrolyte 100 in the first embodiment may be used as the solid electrolyte contained in the electrolyte layer 202. In other words, the electrolyte layer 202 may contain the solid electrolyte that has the same composition as the composition of the solid electrolyte 100. This configuration can further improve the charge and discharge efficiency of the battery 2000.

The electrolyte layer 202 may contain a halide solid electrolyte having a composition different from that of the solid electrolyte 100.

For example, the electrolyte layer 202 may contain a sulfide solid electrolyte.

The electrolyte layer 202 may contain only one solid electrolyte selected from the materials listed as the examples of the solid electrolyte.

The electrolyte layer 202 may contain two or more solid electrolytes selected from the materials listed as the examples of the solid electrolyte. In this case, the solid electrolytes have different compositions from each other. For example, the electrolyte layer 202 may contain a halide solid electrolyte and a sulfide solid electrolyte.

The thickness of the electrolyte layer 202 may be greater than or equal to 1 $\mu$m and less than or equal to 300 $\mu$m. When the thickness of the electrolyte layer 202 is greater than or equal to 1 $\mu$m, a short circuit is less likely to occur between the positive electrode 201 and the negative electrode 203. When the thickness of the electrolyte layer 202 is less than or equal to 300 $\mu$m, the battery 2000 can operate with a high output.

The negative electrode 203 contains a material capable of occluding and releasing metal ions (for example, lithium ions). The negative electrode 203 contains, for example, a negative electrode active material.

Examples of the negative electrode active material may include metal materials, carbon materials, oxides, nitrides, tin compounds, and silicon compounds. The metal material may be an elemental metal. The metal material may be an alloy. Examples of the metal material include lithium metal and a lithium alloy. Examples of the carbon material include natural graphite, coke, graphitizing carbon, carbon fibers, spherical carbon, artificial graphite, and amorphous carbon. When Silicon (Si), tin (Sn), a silicon compound, or a tin compound is used, capacity density can be increased.

The negative electrode 203 may contain a solid electrolyte. This configuration can improve the lithium-ion conductivity in the negative electrode 203, enabling the battery 2000 to operate with a high output. The materials listed as the examples of the solid electrolyte 100 in the first embodiment may be used as the solid electrolyte contained in the negative electrode 203. In other words, the negative electrode 203 may contain a solid electrolyte having the same composition as the composition of the solid electrolyte 100.

The solid electrolyte contained in the negative electrode 203 in the second embodiment may have any shape. The shape of the solid electrolyte in the negative electrode 203 may be, for example, acicular, spherical, or ellipsoidal. For example, the shape of the solid electrolyte in the negative electrode 203 may be particulate.

When the shape of the solid electrolyte in the negative electrode 203 is particulate (e.g., spherical), the median diameter of the solid electrolyte may be less than or equal to 100 $\mu$m. When the median diameter of the solid electrolyte is less than or equal to 100 $\mu$m, the negative electrode active material and the solid electrolyte can be favorably dispersed in the negative electrode 203. This improves the charge and discharge properties of the battery 2000.

The median diameter of the solid electrolyte in the negative electrode 203 may be less than or equal to 10 $\mu$m, or less than or equal to 1 $\mu$m. With this configuration, the negative electrode active material and the solid electrolyte can be favorably dispersed in the negative electrode 203.

The median diameter of the solid electrolyte in the negative electrode 203 may be smaller than that of the negative electrode active material. With this configuration, the negative electrode active material and the solid electrolyte can be further favorably dispersed in the negative electrode 203.

The negative electrode active material in the second embodiment may have any shape. The shape of the negative electrode active material may be, for example, acicular, spherical, or ellipsoidal. For example, the shape of the negative electrode active material may be particulate.

The median diameter of the negative electrode active material may be greater than or equal to 0.1 $\mu$m and less than or equal to 100 $\mu$m. When the median diameter of the negative electrode active material is greater than or equal to 0.1 $\mu$m, the negative electrode active material and the solid electrolyte can be favorably dispersed in the negative electrode 203. This improves the charge and discharge properties of the battery 2000. When the median diameter of the negative electrode active material is less than or equal to 100 $\mu$m, the lithium diffusion rate in the negative electrode active material is sufficiently high. This enables the battery 2000 to operate with a high output.

The median diameter of the negative electrode active material may be larger than the median diameter of the solid electrolyte contained in the negative electrode 203. With this configuration, the negative electrode active material and the solid electrolyte can be favorably dispersed.

The volume ratio "v2:(100 - v2)" between the negative electrode active material and the solid electrolyte in the negative electrode 203 may satisfy $30 \leq v2 \leq 95$. Here, v2 represents the volume ratio of the negative electrode active material with the total volume of the negative electrode active material and the solid electrolyte in the negative electrode 203 being taken as 100. When $30 \leq v2$ is satisfied, the battery 2000 can have sufficient energy density. When $v2 \leq 95$ is satisfied, the battery 2000 can operate with a high output.

The thickness of the negative electrode 203 may be greater than or equal to 10 $\mu$m and less than or equal to 500 $\mu$m. When the thickness of the negative electrode 203 is greater than or equal to 10 $\mu$m, the battery 2000 can have sufficient energy density. When the thickness of the negative electrode 203 is less than or equal to 500 $\mu$m, the battery 2000 can operate with a high output.

At least one selected from the group consisting of the positive electrode 201, the electrolyte layer 202, and the negative electrode 203 may contain a binder to improve adhesion between particles. The binder is used to improve the strength of bond between the materials that constitute the electrode. Examples of the binder include polyvinylidene fluoride, polytetrafluoroethylene, polyethylene, polypropylene, aramid resin, polyamide, polyimide, polyamide-imide, polyacrylonitrile, polyacrylic acid, polyacrylic acid methyl ester, polyacrylic acid ethyl ester, polyacrylic acid hexyl ester, polymethacrylic acid, polymethacrylic acid methyl ester, polymethacrylic acid ethyl ester, polymethacrylic acid hexyl ester, polyvinyl acetate, polyvinyl pyrrolidone, polyether, polyethersulfone, hexafluoropolypropylene, styrene-butadiene rubber, and carboxymethylcellulose. Furthermore, the binder may be a copolymer of two or more materials selected from the group consisting of tetrafluoroethylene, hexafluoroethylene, hexafluoropropylene, perfluoroalkyl vinyl ether, vinylidene fluoride, chlorotrifluoroethylene, ethylene, propylene, pentafluoropropylene, fluoromethyl vinyl ether, acrylic acid, and hexadiene. A mixture of two or more of the above materials may also be used as a binder.

The negative electrode 203 may contain a conductive additive to improve electron conductivity. Examples of the conductive additive include graphites such as natural graphite and artificial graphite, carbon blacks such as acetylene black and Ketjen black, conductive fibers such as carbon fibers and metal fibers, fluorocarbons, metal powders such as aluminum, conductive whiskers such as zinc oxide and potassium titanate, conductive metal oxides such as titanium oxide, and conductive polymer compounds such as polyaniline, polypyrrole, and polythiophene. When a carbon conductive additive is used, the cost can be lowered.

The battery 2000 of the second embodiment may have a coin-like shape, a cylindrical shape, a rectangular shape, a sheet-like shape, a button-like shape, a flat shape, or a multilayer shape.

EXAMPLES

Hereinafter, this disclosure will be explained in detail below using Examples 1 to 9 and Comparative Examples 1 to 5.

<<EXAMPLE 1>>

[Production of Sulfide Solid Electrolyte]

In an argon glove box having a dew point of lower than or equal to -60°C, $Li_2S$ and $P_2S_5$ as raw material powders were weighed to be in a molar ratio of $Li_2S:P_2S_5$ = 75:25. The raw material powders were pulverized and mixed in a mortar to produce a mixture. Then, the mixture was subjected to a milling treatment at 510 rpm for 10 hours by using a planetary ball mill (Model P-7 manufactured by Fritsch). In this way, a glassy solid electrolyte was produced. The produced solid electrolyte was heat-treated in an inert atmosphere at 270°C for 2 hours. In this way, glass-ceramic $Li_2S$-$P_2S_5$ (hereafter referred to as LPS), which is a sulfide solid electrolyte, was produced.

[Production of Coated Positive Electrode Active Material]

$LiNi_{0.8}(Co,Mn)_{0.2}O_2$ (hereinafter referred to as NCM) was used as the positive electrode active material. The coating material was $LiNbO_3$. The coating layer containing $LiNbO_3$ was formed by a liquid-phase coating method. Specifically, a precursor solution of an ion-conducting material was first applied to the surface of the NCM. Thus, a precursor film was formed on the surface of the NCM. The NCM covered by the precursor film was then heat-treated. The heat treatment caused gelation of the precursor film, forming the coating layer composed of $LiNbO_3$. In this way, the coated positive electrode active material (hereafter referred to as Nb-NCM) was produced.

[Production of Positive Electrode Material]

A carbon fiber (VGCF-H manufactured by Showa Denko K.K.) was used as the first conductive material. The average major axis diameter of VGCF-H was 6 $\mu$m. Acetylene black having an average particle diameter of 23 nm was used as the second conductive material. In an argon glove box having a dew point of less than or equal to -60°C, a binder, a solvent, VGCF-H, and acetylene black were mixed and dispersed using a homogenizer. Thus, a mixture of a binder, a solvent, VGCF-H, and acetylene black was produced. The mixing ratio of VGCF-H to acetylene black was 2:0.125 by mass. Nb-NCM as the coated active material and LPS as the solid electrolyte were added to the mixture and mixed, and then dispersed by a homogenizer to produce a slurry containing a positive electrode material. The mixing ratio of Nb-NCM to LPS was 70:30 by volume. "VGCF" is a registered trademark of Showa Denko K.K.

[Production of Positive Electrode]

The produced slurry was applied on a current collector and dried on a hot plate to produce a positive electrode.

«EXAMPLE 2»

In the process of producing a positive electrode material, the mixing ratio of VGCF-H to acetylene black was 2:0.3 by mass. The positive electrode of Example 2 was produced in the same way as that of Example 1, except for this.

<<EXAMPLE 3>>

In the process of producing the positive electrode material, the mixing ratio of VGCF-H to acetylene black was 2:0.4 by mass. The positive electrode of Example 3 was produced in the same way as that of Example 1, except for this.

«EXAMPLE 4»

In the process of producing the positive electrode material, the mixing ratio of VGCF-H to acetylene black was 2:0.475 by mass. The positive electrode of Example 4 was produced in the same way as that of Example 1, except for this.

«EXAMPLE 5»

In the process of producing the positive electrode material, the mixing ratio of VGCF-H to acetylene black was 1.6:0.475 by mass. The positive electrode of Example 5 was produced in the same way as that of Example 1, except for this.

«EXAMPLE 6»

In the process of producing the positive electrode material, the mixing ratio of VGCF-H to acetylene black was 2:0.65 by mass. The positive electrode of Example 6 was produced in the same way as that of Example 1, except for this.

«EXAMPLE 7»

In the process of producing the positive electrode material, the mixing ratio of VGCF-H to acetylene black was 1.5:0.475 by mass. The mixing ratio of Nb-NCM to LPS was 67:33 by volume. The positive electrode of Example 7 was produced in the same way as that of Example 1, except for these.

«EXAMPLE 8»

In the process of producing the positive electrode material, the mixing ratio of VGCF-H to acetylene black was 2:0.3 by mass. The mixing ratio of Nb-NCM to LPS was 72:28 by volume. The positive electrode of Example 8 was produced in the same way as that of Example 1, except for these.

«EXAMPLE 9»

In the process of producing the positive electrode material, the mixing ratio of VGCF-H to acetylene black was 2:0.3 by mass. The mixing ratio of Nb-NCM to LPS was 75:25 by volume. The positive electrode of Example 9 was produced in the same way as that of Example 1, except for these.

<<COMPARATIVE EXAMPLE 1»

In the process of producing the positive electrode material, the mixing ratio of VGCF-H to acetylene black was 2.4:0 by mass. In other words, the conductive material in Comparative Example 1 includes only VGCF-H. The positive electrode of Comparative Example 1 was produced in the same way as that of Example 1, except for this.

<<COMPARATIVE EXAMPLE 2»

In the process of producing the positive electrode material, the mixing ratio of VGCF-H to acetylene black was 2:0 by mass. In other words, the conductive material in Comparative Example 2 includes only VGCF-H. The positive electrode of Comparative Example 2 was produced in the same way as that of Example 1, except for this.

<<COMPARATIVE EXAMPLE 3»

In the process of producing the positive electrode material, the mixing ratio of VGCF-H to acetylene black was 1.6:0 by mass. In other words, the conductive material in Comparative Example 3 includes only VGCF-H. The positive electrode of Comparative Example 3 was produced in the same way as that of Example 1, except for this.

<<COMPARATIVE EXAMPLE 4»

In the process of producing the positive electrode material, the mixing ratio of VGCF-H to acetylene black was 0.8:0 by mass. In other words, the conductive material in Comparative Example 4 includes only VGCF-H. The positive electrode of Comparative Example 4 was produced in the same way as that of Example 1, except for this.

<<COMPARATIVE EXAMPLE 5»

In the process of producing the positive electrode material, the mixing ratio of VGCF-H to acetylene black was 0:0.65 by mass. In other words, the conductive material in Comparative Example 5 includes only acetylene black. The positive electrode of Comparative Example 5 was produced in the same way as that of Example 1, except for this.

(Evaluation of Electron Conductivity)

The positive electrodes of Examples 1 to 9 and Comparative Examples 1 to 5 were subjected to evaluation of electron conductivity under the following conditions.

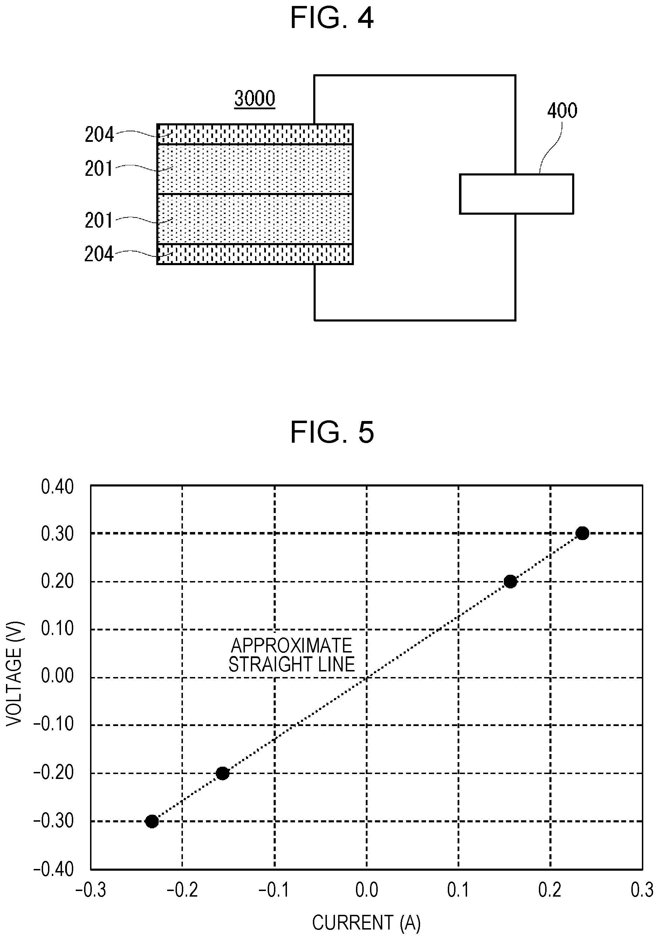

Fig. 4 illustrates how the electron conductivity of a positive electrode is evaluated. The electron conductivity of the positive electrode was evaluated at 25°C using an opposing positive electrode 3000 illustrated in Fig. 4. A stack that includes two plates of positive electrodes 201 facing each other and current collectors 204 that are placed on outer surfaces of the stack were pressed together at high pressure to produce the opposing positive electrode 3000. An Al foil was used as the current collector 204. A potentiostat 400 was connected to the opposing positive electrode 3000, and the electronic resistance was measured by the following procedure.

Voltages of 0.3 V, 0.2 V, -0.2 V, and -0.3 V were applied for 1 minute each by the potentiostat 400, and current values for the voltages were read. Fig. 5 is a graph indicating a correlation between voltage and current value of the opposing positive electrode 3000 of Example 1. The current values were linearly approximated by Ohm's law. The slope of the approximate straight line indicates DC resistance.

Using the value of DC resistance obtained from the slope of the approximate straight line, the electron conductivity σ of the positive electrode of Example 1 was calculated by Equation 2 below. The calculated electron conductivities are indicated in Table 1.

$$\sigma = \{R \times S/(2t)\}^{-1} \qquad \qquad \text{Equation (2)}$$

In Equation 2, S represents the surface area of the positive electrode, R represents the value of DC resistance obtained from the slope of the approximate straight line, t represents the thickness of the positive electrode. The "thickness of the positive electrode" means the thickness of the positive electrode 201 in Fig. 4.

The electron conductivities of the positive electrodes of Examples 2 to 9 and Comparative Examples 1 to 5 were calculated by the same method as above. The calculated electron conductivities are indicated in Table 1. In Table 1, VGCF-H (mass %) represents the mass ratio of VGCF-H with the mass of the positive electrode active material being taken as 100%. Acetylene black (mass %) represents the mass ratio of acetylene black with the mass of the positive electrode active material being taken as 100%. The total conductive material (mass %) represents the total mass ratio of VGCF-H and acetylene black with the mass of the positive electrode active material being taken as 100%. In Table 1, VGCF-H (mass %) represents the mass ratio of VGCF-H to the total mass of VGCF-H and acetylene black. Acetylene black (mass %) represents the mass ratio of acetylene black to the total mass of VGCF-H and acetylene black.

[Table 1]

| | Coated Positive Electrode Active Material (volume %) | Solid Electrolyte (volume %) | VGCF-H (mass %)* | Acetylene Black (mass %)* | Total Conductive Material (mass %)* | VGCF-H (mass %) | Acetylene Black (mass %) | Electron Conductivity of Positive Electrode (mS/cm) |
|---|---|---|---|---|---|---|---|---|
| Ex. 1 | 70 | 30 | 2 | 0.125 | 2.125 | 94 | 6 | 8.8 |
| Ex. 2 | 70 | 30 | 2 | 0.3 | 2.3 | 87 | 13 | 11.7 |
| Ex. 3 | 70 | 30 | 2 | 0.4 | 2.4 | 83 | 17 | 14.8 |
| Ex. 4 | 70 | 30 | 2 | 0.475 | 2.475 | 81 | 19 | 21 |
| Ex. 5 | 70 | 30 | 1.6 | 0.475 | 2.075 | 77 | 23 | 7.4 |
| Ex. 6 | 70 | 30 | 2 | 0.65 | 2.65 | 75 | 25 | 30.6 |
| Ex. 7 | 67 | 33 | 1.5 | 0.475 | 1.975 | 76 | 24 | 5.7 |
| Ex. 8 | 72 | 28 | 2 | 0.3 | 2.3 | 87 | 13 | 17.6 |
| Ex. 9 | 75 | 25 | 2 | 0.3 | 2.3 | 87 | 13 | 24.8 |
| Com. Ex. 1 | 70 | 30 | 2.4 | 0 | 2.4 | 100 | 0 | 6.0 |

(continued)

| | Coated Positive Electrode Active Material (volume %) | Solid Electrolyte (volume %) | VGCF-H (mass %)* | Acetylene Black (mass %)* | Total Conductive Material (mass %)* | VGCF-H (mass %) | Acetylene Black (mass %) | Electron Conductivity of Positive Electrode (mS/cm) |
|---|---|---|---|---|---|---|---|---|
| Com. Ex. 2 | 70 | 30 | 2 | 0 | 2 | 100 | 0 | 2.8 |
| Com. Ex. 3 | 70 | 30 | 1.6 | 0 | 1.6 | 100 | 0 | 0.9 |
| Com. Ex. 4 | 70 | 30 | 0.8 | 0 | 0.8 | 100 | 0 | 0.5 |
| Com. Ex. 5 | 70 | 30 | 0 | 0.65 | 0.65 | 0 | 100 | 0.7 |
| *mass ratio of conductive material with mass of coated positive electrode active material being taken as 100% | | | | | | | | |

<<Discussion>>

Examples 1 to 9, which contain both VGCF-H and acetylene black as the conductive material, showed a tendency in which the electron conductivities of the positive electrodes become high compared to Comparative Examples 1 to 5, which contain only one of VGCF-H and acetylene black.

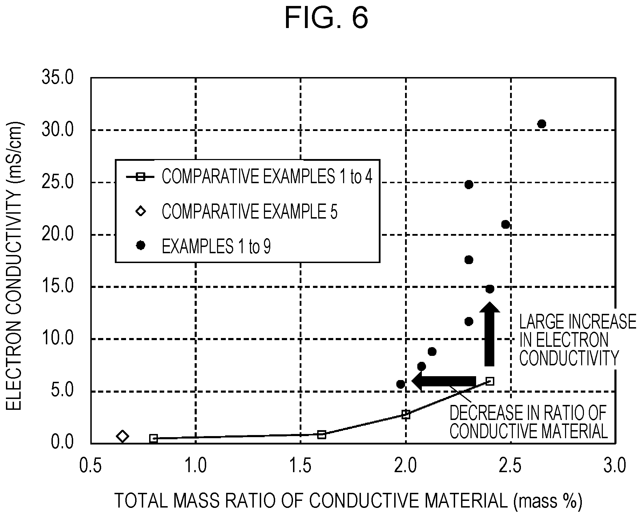

Fig. 6 is a graph indicating the electron conductivities of the positive electrodes of Examples 1 to 9 and Comparative Examples 1 to 5. In Fig. 6, the vertical axis indicates the calculated electron conductivity. The horizontal axis indicates the mass ratio of the conductive material with the mass of the coated positive electrode active material being taken as 100%.

The mass ratio of the conductive material of Example 3 was the same as that of Comparative Example 1. However, the electron conductivity of Example 3 was more than twice that of Comparative Example 1. This shows that, when the mass ratios of the conductive material are substantially the same, one containing both VGCF-H and acetylene black was able to have much larger electron conductivity.

The electron conductivity of Example 7 was substantially the same as that of Comparative Example 1. However, the mass ratio of the conductive material in Example 7 was smaller than that in Comparative Example 1. This shows that, when the electron conductivities are substantially the same, one containing both VGCF-H and acetylene black required the conductive material in a smaller ratio. This seems to have resulted from that the conductive material contains VGCF-H and acetylene black. VGCF-H and acetylene black are readily connected to each other, efficiently forming an electron conduction network in the positive electrode.

In Examples 2, 8 and 9, the mass ratio of the conductive material was the same. The volume ratio of the coated positive electrode active material and the electron conductivity in Example 2 were the largest, followed in order by those in Example 8 and those in Example 9. This shows that the electron conductivity increased as the volume ratio of the positive electrode active material increased.

As indicated by Examples 2 to 6, the electron conductivity increased as the mass ratio of acetylene black to the total conductive material increased.

Industrial Applicability

The batteries of the present disclosure can be used, for example, as all-solid-state lithium secondary batteries.

Reference Signs List

1000, 1001 positive electrode material
100 solid electrolyte
110 positive electrode active material

120 coating layer
130 coated positive electrode active material
140 conductive material
150 first conductive material
160 second conductive material
2000 battery
201 positive electrode
202 electrolyte layer
203 negative electrode
204 current collector
3000 opposing positive electrode
400 potentiostat

**Claims**

1. A positive electrode material comprising:

   a mixture of a positive electrode active material, a solid electrolyte, and a conductive material, wherein
   the conductive material contains a first conductive material having an average major axis diameter of greater than or equal to 1 $\mu$m and a second conductive material having an average particle diameter of less than or equal to 100 nm, and
   a ratio of a volume of the positive electrode active material to a total volume of the positive electrode active material and the solid electrolyte is greater than or equal to 60% and less than or equal to 90%.

2. The positive electrode material according to claim 1, wherein the ratio of the volume of the positive electrode active material to the total volume of the positive electrode active material and the solid electrolyte is greater than or equal to 65% and less than or equal to 85%.

3. The positive electrode material according to claim 1, wherein the ratio of the volume of the positive electrode active material to the total volume of the positive electrode active material and the solid electrolyte is greater than or equal to 67% and less than or equal to 75%.

4. The positive electrode material according to any one of claims 1 to 3, wherein a mass ratio of the conductive material is less than or equal to 3 with a mass ratio of the positive electrode active material being taken as 100.

5. The positive electrode material according to any one of claims 1 to 4, wherein a ratio of a mass of the second conductive material to a mass of the conductive material is less than or equal to 80%.

6. The positive electrode material according to claim 5, wherein the ratio of the mass of the second conductive material to the mass of the conductive material is greater than or equal to 5% and less than or equal to 50%.

7. The positive electrode material according to claim 5, wherein the ratio of the mass of the second conductive material to the mass of the conductive material is greater than or equal to 6% and less than or equal to 25%.

8. The positive electrode material according to any one of claims 1 to 7, wherein the first conductive material has an average major axis diameter of greater than or equal to 4 $\mu$m.

9. The positive electrode material according to claim 8, wherein the second conductive material has an average particle diameter of less than or equal to 25 nm.

10. The positive electrode material according to any one of claims 1 to 9, wherein the first conductive material and the second conductive material contain a carbon material.

11. The positive electrode material according to any one of claims 1 to 10, wherein the first conductive material contains a fibrous carbon material.

12. The positive electrode material according to any one of claims 1 to 11, wherein the second conductive material contains carbon black.

13. The positive electrode material according to claim 12, wherein the carbon black contains acetylene black.

14. The positive electrode material according to any one of claims 1 to 13, wherein the solid electrolyte contains at least one selected from the group consisting of a sulfide solid electrolyte and a halide solid electrolyte.

15. The positive electrode material according to any one of claims 1 to 14, wherein the positive electrode active material has a layered rock-salt structure.

16. The positive electrode material according to any one of claims 1 to 15, further comprising a coating layer covering at least a portion of a surface of the positive electrode active material.

17. A battery comprising:

    a positive electrode containing the positive electrode material according to any one of claims 1 to 16;
    a negative electrode; and
    an electrolyte layer disposed between the positive electrode and the negative electrode.

18. The battery according to claim 17, wherein the electrolyte layer contains a sulfide solid electrolyte.

FIG. 1

1000

FIG. 2

1001

FIG. 3

2000

# FIG. 4

# FIG. 5

# FIG. 6

## INTERNATIONAL SEARCH REPORT

| | International application No. |
|---|---|
| | **PCT/JP2022/025012** |

**A. CLASSIFICATION OF SUBJECT MATTER**

**H01M 4/13**(2010.01)i; **H01M 4/36**(2006.01)i; **H01M 4/62**(2006.01)i; **H01M 10/052**(2010.01)i; **H01M 10/0562**(2010.01)i
FI: H01M4/13; H01M4/62 Z; H01M4/36 C; H01M10/052; H01M10/0562

According to International Patent Classification (IPC) or to both national classification and IPC

**B. FIELDS SEARCHED**

Minimum documentation searched (classification system followed by classification symbols)

H01M4/13; H01M4/36; H01M4/62; H01M10/052; H01M10/0562

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | WO 2020/130069 A1 (SHOWA DENKO KK) 25 June 2020 (2020-06-25) | 1–18 |
| A | JP 2018-41686 A (NISSAN MOTOR) 15 March 2018 (2018-03-15) | 1–18 |
| A | JP 2016-9679 A (SAMSUNG ELECTRONICS CO LTD) 18 January 2016 (2016-01-18) | 1–18 |
| A | JP 2016-58277 A (TOYOTA MOTOR CORP) 21 April 2016 (2016-04-21) | 1–18 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **05 September 2022** | **13 September 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

## INTERNATIONAL SEARCH REPORT
### Information on patent family members

International application No.

**PCT/JP2022/025012**

| Patent document cited in search report | | | Publication date (day/month/year) | Patent family member(s) | | | Publication date (day/month/year) |
|---|---|---|---|---|---|---|---|
| WO | 2020/130069 | A1 | 25 June 2020 | (Family: none) | | | |
| JP | 2018-41686 | A | 15 March 2018 | (Family: none) | | | |
| JP | 2016-9679 | A | 18 January 2016 | (Family: none) | | | |
| JP | 2016-58277 | A | 21 April 2016 | US | 2016/0072120 | A1 | |
| | | | | CN | 105406033 | A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2020130069 A